# EUROPÄISCHE PATENTSCHRIFT

(11) **EP 1 359 035 B1**
(45) Veröffentlichungstag und Bekanntmachung des Hinweises auf die Patenterteilung: **05.10.2005**
(21) Anmeldenummer: 03008518.7
(22) Anmeldetag: 12.04.2003
(51) Int. Cl.: B60H 1/34

(54) **Luftauslassdüse**
Air outlet nozzle
Buse de sortie d'air

(30) Priorität: 02.05.2002 DE 10219696
(43) Veröffentlichungstag der Anmeldung: 05.11.2003
(73) Patentinhaber: DaimlerChrysler AG, 70567 Stuttgart (DE)
(72) Erfinder: Currle, Joachim, Dr., 70327 Stuttgart (DE); Frühauf, Frank, Dr., 73773 Aichwald (DE)

(56) Entgegenhaltungen:
- EP-A- 0 324 770
- EP-A- 0 417 351
- DE-A- 4 139 099
- DE-A- 19 612 764
- DE-A- 19 807 292
- GB-A- 624 932
- US-A- 5 385 503

## Beschreibung

Die Erfindung betrifft eine Luftauslassdüse nach dem Oberbegriff des Anspruchs 1 wie in DE 19807292 offenbart.

Bei Belüftungsvorrichtungen für Fahrzeuge werden in der Praxis Luftauslassdüsen mit Steuereinrichtungen eingesetzt, die eine gezielte Steuerung des austretenden Luftstrahls ermöglichen. Dabei ist man bestrebt, neben der Richtung des Luftstrahles auch die Strahlaufspreizung zu steuern. Es hat sich gezeigt, dass sich gegenüber einem fokussierten Luftstrahl so eine energetisch effizientere Temperierung erzielen lässt. Erfahrungsgemäß lenkt ein Fahrzeuginsasse einen fokussierten und temperierten Luftstrahl nach einer gewissen Zeit von sich weg, um unangenehme Zugerscheinungen zu vermeiden. Dies bedeutet, dass die Heiz- bzw. Kühlleistung erhöht werden muss, um eine für den Insassen angenehme Temperatur zu schaffen, da der Luftstrahl nicht den Insassen direkt, sondern vornehmlich andere Dinge im Fahrzeug heizt oder kühlt. Wird der Insasse dagegen mit einem diffusen Luftstrahl direkt angestrahlt, so werden Zugerscheinungen vermieden und die Heiz- bzw. Kühlleistung kann geringer bemessen werden.

Aus der EP 0 324 770 B1 ist eine Luftauslassdüse bekannt, die drei zueinander verschiebbare Luftleitgitter aufweist. Die Luftleitgitter sind in der Luftaustrittsebene der Luftauslassdüse angeordnet, wobei ein Luftleitgitter fest mit der Düse verbunden ist und zwei der Gitter parallel zu dem fest montierten Luftleitgitter verschiebbar sind. Durch das Verschieben der Luftleitgitter bilden sich unterschiedlich geneigte Luftleitflächen aus, so dass die Austrittsrichtung des Luftstrahls steuerbar ist. Nachteilig ist hier, dass die Luftleitgitter einen hohen Strömungswiderstand aufweisen und dass lediglich die Luftaustrittsrichtung, nicht jedoch die Aufspreizung des Luftstrahles steuerbar ist.

Aus der DE 41 39 099 C2 ist ein Luftauslass bekannt, der ein rotationssymmetrisches Gehäuse und eine starre Prallplatte aufweist. Diese ist ortsfest in dem Auslassquerschnitt des Luftauslasses angeordnet. Im Inneren des Gehäuses sind radial umlaufend Drallschaufeln angeordnet. Durch axiales Verschieben der Drallschaufeln innerhalb des Luftauslasses kann die Diffusivität des austretenden Luftstrahles gesteuert werden. Von Nachteil ist hier die hohe Strömungsversperrung durch die Drallschaufeln, die große Verluste zur Folge hat.

Die DE 196 12 764 C2 zeigt einen Luftauslass mit in der Luftaustrittsebene ortsfest angeordneten Drallschaufeln. Im Inneren des Luftauslasses ist ein axial verschiebbares Luftleitrohr zur Veränderung der Diffusivität der austretenden Luftströmung angeordnet. Auch hier treten hohe Strömungsverluste infolge der großen Strömungsversperrung auf.

Die GB 624,932 zeigt eine Luftauslassdüse mit einer feststehenden Prallplatte und einem Gehäuse mit radialem Lufteinlass. Im Inneren des Gehäuses sind Luftleitelemente axial verstellbar angeordnet. Je nach axialer Position der Luftleitelemente leiten diese zusammen mit der Prallplatte die radial in das Düsengehäuse einströmende Luft im Bereich zwischen 180 und 90 Grad um, so dass die Luft einstellbar radial oder axial austritt. Nachteilig ist hier das durch die radiale Lufteintrittsrichtung bedingte relativ große Bauvolumen der Luftdüse. Auch ist der Strömungswiderstand dieser Luftauslassdüse infolge der Luftumlenkung relativ hoch.

Der vorliegenden Erfindung liegt die Aufgabe zugrunde, eine Luftauslassdüse mit einstellbarer Diffusivität des Luftstrahles zu schaffen, die kompakt ausgebildet ist, sowie eine große erzielbare Luftstrahlaufspreizung bei geringen Strömungsverlusten aufweist Vorzugsweise soll die Luftauslassdüse einfach und/oder komfortabel zu bedienen sein und geringe Geräuschentwicklung aufweisen.

Die Aufgabe wird erfindungsgemäß durch eine Luftauslassdüse nach den Merkmalen des Anspruchs 1 gelöst.

Im Mündungsbereich der Luftauslassdüse ist ein Verdrängungskörper angeordnet, der axial verschiebbar ist, d.h. in Richtung der Mittellängsachse der Luftauslassdüse verschiebbar ist, und eine einstellbare Strömungsversperrung aufweist. Der Verdrängungskörper kann im Mündungsbereich der Luftdüse in deren Luftaustrittsebene angeordnet sein oder auch aus dem Mündungsbereich heraus nach außen verbracht werden, so dass er außerhalb des Düsengehäuses angeordnet ist. Durch Zusammenwirken der Position des Verdrängungskörpers relativ zu der Luftaustrittsebene einerseits und der einstellbaren Strömungsversperrung des Verdrängungskörpers andererseits können die Strömungs- und Druckverhältnisse im Mündungsbereich der Luftauslassdüse bzw. stromab des Mündungsbereiches gezielt gesteuert werden, so dass die aus der Luftauslassdüse austretende Luftströmung in ihrer Strahlaufspreizung bzw. Diffusivität und/oder Richtung steuerbar ist. Die Strömungsversperrung durch den Verdrängungskörper und damit die auftretenden Strömungsverluste sind gering, da der Verdrängungskörper bei großer Verdrängungswirkung bzw. Strömungsversperrung außerhalb des Düsengehäuses angeordnet ist.

Es ist in einer Ausführung der Erfindung vorgesehen, die Strömungscharakteristik des Verdrängungskörpers durch Verändern von dessen Querschnitt und/oder Form zu steuern. Der Verdrängungskörper kann hierzu schwenkbare Lamellen aufweisen, die vorzugsweise V-förmig oder ringförmig angeordnet sind.

Durch das Verstellen der Lamellen wird die Form oder der Querschnitt des Verdrängungskörpers verändert.

In einer Ausführung der Erfindung kann der Verdrängungskörper eine elastische Membran aufweisen, die mit den Lamellen oder mit Stäben bzw. stabförmigen Lamellen zusammenwirkt und eine abgerundete Außenkontur des Verdrängungskörpers ausbildet. Dabei kann die gesamte Außenkontur oder einzelne Begrenzungsflächen des Verdrängungskörpers von der elastischen Membran gebildet werden.

Eine Ausführung der Erfindung sieht einen luftdurchlässigen Verdrängungskörper vor, dessen Luftdurchlässigkeit einstellbar ist. Die Luftdurchlässigkeit kann so einstellbar sein, dass der Verdrängungskörper in nicht ausgezogener Position, d. h. im Bereich der Mündungsebene, minimalen Strömungswiderstand, d. h. maximale Luftdurchlässigkeit aufweist und/oder in ausgezogener Position, d. h. außerhalb des Düsengehäuses, maximalen Strömungswiderstand, d. h. minimale Luftdurchlässigkeit aufweist.

Der Verdrängungskörper kann, um verschiedene Strömungsprofile zu ermöglichen, eine über seinen Querschnitt homogene oder eine inhomogene Luftdurchlässigkeit aufweisen.

Um die Austrittsrichtung des Luftstrahles zu steuern kann vorgesehen sein, dass der Verdrängungskörper eine inhomogene Luftdurchlässigkeit, d. h. in lokal abgegrenzten Flächen unterschiedliche Luftdurchlässigkeit aufweist. Vorzugsweise kann der Verdrängungskörper mehrere geschichtete Lochbleche mit unterschiedlich geteiltem Lochmuster oder Gitter mit unterschiedlicher Teilung aufweisen, so dass je nach Position der Lochbleche oder Gitter zueinander eine lokal unterschiedliche Luftdurchlässigkeit eingestellt werden kann. Dadurch ist ein Ablenken des Luftstrahles in eine bestimmte Richtung möglich. Auch ist durch Steuern der inhomogenen Luftdurchlässigkeit des Verdrängungskörpers eine zeitlich veränderbare, vorzugsweise periodische Steuerung der Austrittsrichtung des Luftstahles möglich. Durch Kippen des Verdrängungskörpers gegenüber dem Düsenaustrittsquerschnitt ist ebenfalls eine Richtungseinstellung des austretenden Luftstrahles möglich.

Eine Ausführung der Erfindung sieht vor, dass der Verdrängungskörper mit einem Düsenmündungselement verbunden ist, welches axial aus dem Düsengehäuse herausziehbar ist. Die Seitenwände des Düsenmündungselementes weisen Aussparungen zum radialen Austritt von Luft auf, so dass keine oder nur eine geringe Strömungsbehinderung auftritt. Es ist vorgesehen, dass das Düsenmündungselement im wesentlichen gleichen Querschnitt und/oder Durchmesser wie das Düsengehäuse aufweist, wobei der Querschnitt und/oder Durchmesser des Düsenmündungselementes geringfügig größer oder kleiner als der des Düsengehäuses sein kann, so dass die Wände des Düsenmündungselementes formschlüssig innerhalb oder außerhalb des Düsengehäuses an dessen Seitenwänden anliegen.

Das Düsenmündungselement kann auch über an den Seitenwänden des Düsengehäuses angeordnete Führungsschienen axial verschiebbar gelagert sein. Ebenso kann eine zentrale, mittig in dem Düsengehäuse angeordnete Führungsschiene vorgesehen sein.

In konstruktiv einfacher Ausführung kann der Verdrängungskörper an fester Position außerhalb des Düsengehäuses oder in der Auslassmündung angeordnet sein.

Eine vorteilhafte Ausführung sieht vor, dass das Düsengehäuse eine Verstellvorrichtung aufweist. Die Verstellvorrichtung kann mechanische und/oder elektrische und/oder mechatronische Aktoren zum Verstellen der Position und/oder Form und/oder des Querschnitts und/oder der Luftdurchlässigkeit des Verdrängungskörpers aufweisen. Insbesondere ist die Verstellvorrichtung mechanisch und/oder automatisch bedienbar, vorzugsweise fernsteuerbar, so dass die Austrittsrichtung und/oder Diffusivität des Luftstrahles über die Verstellvorrichtung manuell und/oder nach einem vorwählbaren Programmablauf oder Zeitablauf steuerbar ist.

Eine Anwendung der Luftaustrittsdüse ist insbesondere für Heiz- und/oder Klima- und/oder Belüftungsanlagen für Fahrzeuge vorgesehen. Insbesondere bei Pkw's besteht der Wunsch, den Luftaustritt der Heiz- und/oder Klimaanlage so zu steuern, dass neben einem gerichteten Luftaustritt mit hoher Geschwindigkeit, ein diffuser Luftaustritt mit geringer Geschwindigkeit einstellbar ist, um z. B. unangenehme Zugerscheinungen zu vermeiden. Dabei muss die Luftauslassdüse komfortabel, d. h. möglichst geräuscharm sein und soll möglichst wenig Bauraum beanspruchen.

Weitere Merkmale und Ausführungsformen der Erfindung ergeben sich aus den Ansprüchen, den Figuren und der Figurenbeschreibung. Die vorstehend genannten und nachfolgend aufgeführten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

In den Figuren sind weitere Ausführungen der Erfindung dargestellt und erläutert, dabei zeigen:
- **Figur 1:**: eine schematische Darstellung einer Luftauslassdüse mit fokussiertem Luftstrahl,
- **Figur 2:**: eine schematische Darstellung der Luftauslassdüse mit diffusem Luftstrahl,
- **Figur 3:**: eine schematische Darstellung eines Verdrängungskörpers mit einstellbarer Luftdurchlässigkeit,
- **Figur 4:**: eine schematische Darstellung einer Luftauslassdüse mit einem formveränderbaren Verdrängungskörper und fokussiertem Luftstrahl,
- **Figur 5:**: eine schematische Darstellung einer Luftauslassdüse mit einem formveränderbaren Verdrängungskörper und diffusem Luftstrahl.

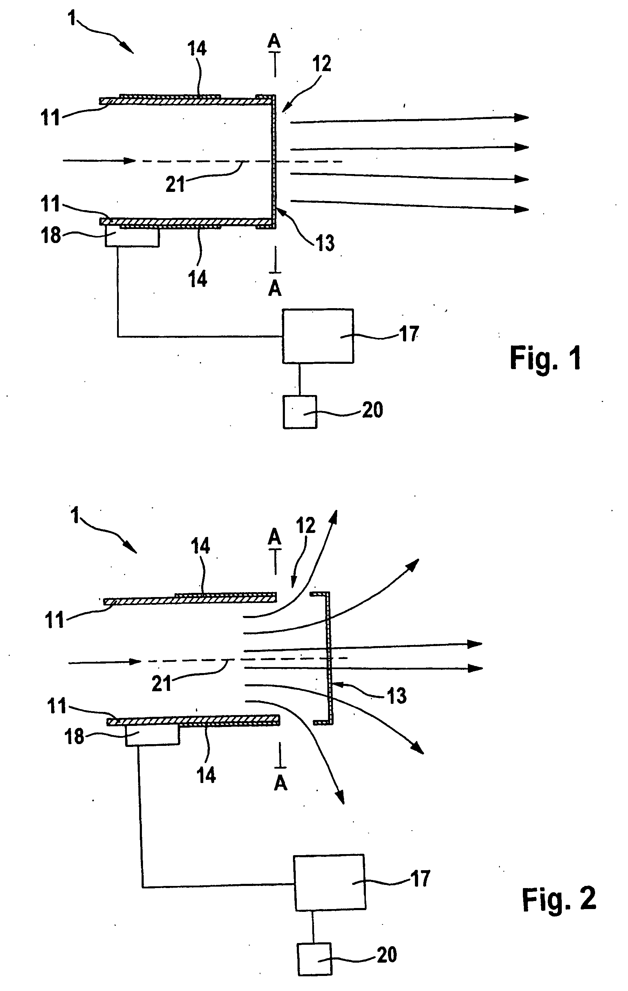

In den **Figuren 1 und 2** ist eine Luftauslassdüse 1 schematisch dargestellt. Die Luftauslassdüse 1 kann z. B. im Cockpitbereich oder in einer Mittelkonsole eingebaut als Luftauslassdüse einer Heiz- und/oder Klimaanlage eines Personenkraftwagens ausgebildet sein.

Die Luftauslassdüse 1 weist ein Gehäuse 11 auf, das am Ende eines Luftkanales oder eines Luftverteilsystems angeordnet ist. An der stromabwärts liegenden Seite des Gehäuses 11 weist die Luftauslassdüse 1 eine Auslassmündung 12 mit einem Verdrängungskörper 13 auf. Der Verdrängungskörper 13 ist mit einem Düsenmündungselement 14 verbunden. Die Mittellängsachse 21 der Luftauslassdüse ist gestrichelt dargestellt und verläuft in etwa rechtwinklig zu der Mündungsebene, die entlang der Linie A - A verläuft.

Das Düsenmündungselement 14 weist Seitenwände auf, die gleich geformten Querschnitt bei geringfügig größeren Abmessungen wie das Gehäuse 11 aufweisen. Die Seitenwände des Düsenmündungselementes 14 umfassen somit das Gehäuse 11 formschlüssig und sind darauf axial verschiebbar gelagert. So kann das Düsenmündungselement 14 zusammen mit dem daran befestigten Verdrängungskörper 13 nach vorne, z. B. in einen Fahrzeuginnenraum hinein, verschoben werden. Die Seitenwände des Düsenmündungselementes 14 weisen im vorderen, zu dem Verdrängungskörper 13 hin gerichteten Abschnitt, Aussparungen auf, die einen möglichst ungehinderten Durchfluss der Luft in überwiegend radialer Richtung ermöglichen.

Eine Antriebsvorrichtung 18 greift zwischen dem Düsengehäuse 11 und dem Düsenmündungselement 14 zum Verschieben des Düsenmündungselementes und/oder zum Steuern der Luftdurchlässigkeit des Verdrängungskörpers 13 ein, so dass die Charakteristik der Luftauslassdüse automatisch angetrieben veränderbar ist. Die Antriebsvorrichtung 18 ist mit einer Steuerungsvorrichtung 17 verbunden, die ein Bedienelement 20 zum manuellen Steuern der Luftauslassdüse 1 aufweist. Neben der manuellen Bedienung kann die Steuerungsvorrichtung 17 die Luftauslassdüse 1 auch programmablaufgesteuert oder zeitgesteuert ansteuern, so dass der aus der Luftauslassdüse 1 austretende Luftstrahl anhand vorwählbarer Programme oder Zeitabläufe automatisch steuerbar ist. Die Luftauslassdüse 1 ist von der Steuerungsvorrichtung 17 so steuerbar, dass der Luftstrahl den Belangen einer Aufheiz- und/oder Abkühlphase einer angeschlossen Heiz- und/oder Klimaanlage optimal entspricht. Dazu ist es möglich, die Steuerungsvorrichtung 17 mit einer Klimaautomatik zu verbinden oder in eine solche zu integrieren.

In der Figur 1 ist der Verdrängungskörper 13 mit dem Düsenmündungselement 14 in einer eingeschobenen Position, so dass der Verdrängungskörper 13 bündig mit dem Gehäuse 11 abschließt, dargestellt. Die Aussparungen in den Seitenwänden des Düsenmündungselementes 14 sind von dem Düsengehäuse 11 verdeckt. In dieser Position tritt der Luftstrahl, in den Figuren durch Pfeile angedeutet, fokussiert in axialer Richtung aus der Luftauslassdüse 1 aus. Der Strömungswiderstand des Verdrängungskörpers 13 wird für maximalen Luftmengendurchsatz minimal eingestellt.

In der Figur 2 ist der Verdrängungskörper 13 mit dem Düsenmündungselement 14 in einer zum Innenraum hin verschobenen , d. h. aus dem Mündungsbereich 12 der Luftauslassdüse 1 heraus stromabwärts versetzten Position dargestellt. Der Verdrängungskörper 13 schließt das Düsenmündungselement 14 zum Innenraum hin ab. Die Aussparungen des Düsenmündungselementes 14 sind nun nicht mehr von den Seitenwänden des Düsengehäuses 11 verdeckt sondern frei durchströmbar, so dass der aus der Luftauslassdüse 1 austretende Luftstrom in näherungsweise radialer Richtung durch dieselben austreten kann. In dieser Position tritt der Luftstrahl diffus aus. Über die Luftdurchlässigkeit des Verdrängungskörpers 13 kann die Strahlaufweitung dergestalt gesteuert werden, dass unterschiedlich hohe Luftmengen durch den Verdrängungskörper einerseits und die Aussparungen andererseits strömen. Man erhält für den diffusen Luftstrom zwei Teilluftströme, deren Verhältnis die Diffusivität des Luftstromes bestimmt. Dieses Verhältnis lässt sich durch die Variablen der Position und/oder Strömungsversperrung des Verdrängungskörpers in Verbindung mit dem Querschnitt und der Anordnung der Aussparungen einstellen. Sofern die Aussparungen in den Seitenwänden des Düsenmündungselementes 14 eine vergleichbare Querschnittsfläche wie der Düsenquerschnitt selbst besitzen, ergeben sich selbst bei maximaler Strahlaufweitung kaum zusätzliche Verluste, im Vergleich mit einer frei durchströmbaren Luftdüse bekannter Bauart. Durch diese Strahlaufweitung in Kombination mit geringen Druckverlusten weist die Luftauslassdüse 1 im Prinzip Strömungseigenschaften einer Luftauslassdüse mit wesentlich größerem Querschnitt auf, so dass sich de facto eine Vergrößerung des Düsenquerschnitts bei gleichbleibenden Düsenabmessungen ergibt.

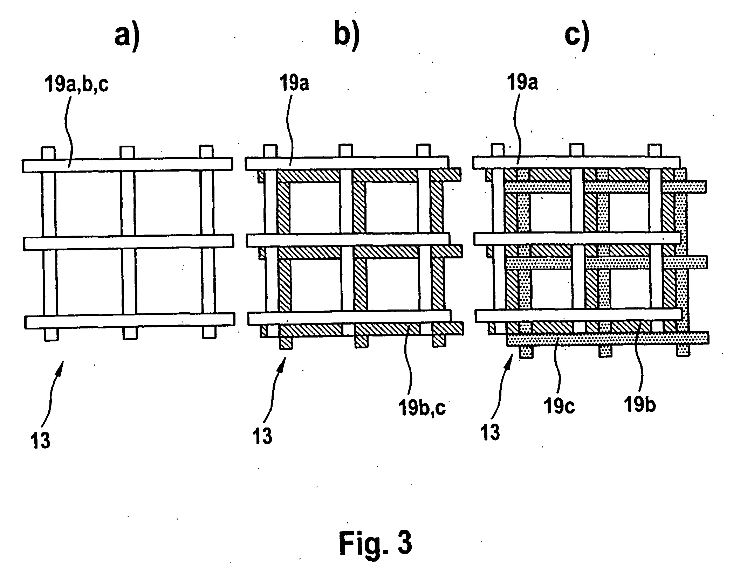

Die **Figur 3** zeigt ein Beispiel des Verdrängungskörpers 13 mit drei in Strömungsrichtung hintereinanderliegend angeordneten Gittern 19a, 19b und 19c. Die einzelnen Gitter 19a, 19b und 19c sind parallel zueinander angeordnet und gegeneinander verschiebbar ausgebildet. In Figur 3a ist die Gitteranordnung mit der geringsten Strömungsversperrung, d. h. der größten Luftdurchlässigkeit des Verdrängungskörpers 13 dargestellt, wie er z. B. bei fokussiertem Luftstrahl üblicherweise verwendet wird. Alle drei Gitter 19a, 19b und 19c sind hintereinander fluchtend angeordnet, so dass sich eine maximale frei durchströmbare Fläche zwischen den Gitterstreben ergibt. In Figur 3c ist die Gitteranordnung mit der höchsten Strömungsversperrung, d. h. mit der geringsten Luftdurchlässigkeit, des Verdrängungskörpers dargestellt, wie er z. B. bei diffusem Luftstrahl verwendet wird. Alle drei Gitter sind versetzt zueinander angeordnet, so dass sich zwischen den Gitterstreben nur eine geringe frei durchströmbare Fläche ergibt. Eine Zwischenstellung mit einer zwischen dem maximalen und minimalen Wert liegenden Luftdurchlässigkeit ist in Figur 3b gezeigt.

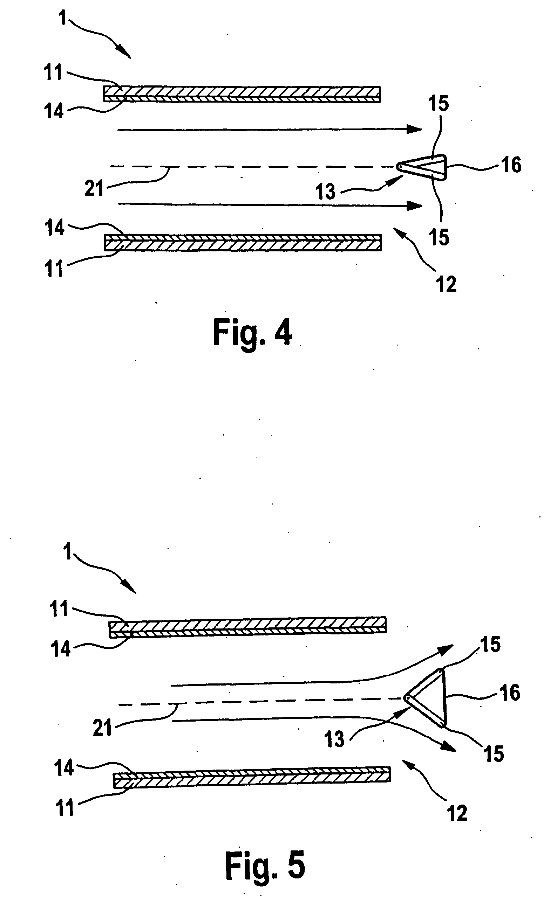

In den **Figuren 4 und 5** ist ein Ausführungsbeispiel der Luftauslassdüse 1 mit einem formveränderlichen Verdrängungskörper 13 gezeigt. Die Luftauslassdüse 1 ist wie vorstehend beschriebenen aufgebaut, wobei hier jedoch das Düsenmündungselement 14 in dem Düsengehäuse 11 innenliegend angeordnet ist. Der Verdrängungskörper 13 ist über nicht dargestellte Verbindungsstege mit dem Düsenmündungselement 14 verbunden und kann durch Bewegen des Düsenmündungselementes 14 in axialer Richtung verschoben werden.

Der Verdrängungskörper 13 weist zwei Lamellen 15 auf, die V-förmig angeordnet und schwenkbar miteinander verbunden sind. Das spitze Ende der V-förmig angeordneten Lamellen weist zur Strömung hin in das Innere der Luftauslassdüse 1. Die Lamellen 15 sind von einer elastischen Membran 16 umhüllt, die die Außenkontur des Verdrängungskörpers 13 bildet. Durch Schwenken der Lamellen kann die Verdrängungswirkung des Verdrängungskörpers 13 verändert werden, indem dessen Querschnitt und damit dessen Strömungswiderstand verändert wird.

In Figur 4 ist eine Stellung der Lamellen 15 mit geringem Strömungswiderstand bzw. Querschnitt des Verdrängungskörpers 13 dargestellt. Der Luftstrahl tritt hier im wesentlichen axial aus dem Gehäuse 11 der Luftdüse 1 aus und wird durch den Verdrängungskörper 13 nur wenig beeinflusst. Für minimale Strahlaufweistung können die Lamellen 15 parallel zueinander ausgerichtet werden.

In Figur 5 ist eine Stellung der Lamellen 15 mit größerem Strömungswiderstand bzw. Querschnitt des Verdrängungskörpers 13 dargestellt. Der Luftstrahl wird hier durch den Verdrängungskörper 13 radial abgelenkt, so dass er aufgeweitet wird.

Durch die Anordnung des Verdrängungskörpers 13 außerhalb des Düsengehäuses 11 ergibt sich eine nur geringe Strömungsversperrung und somit nur geringe zusätzliche Strömungsverluste gegenüber einer frei durchströmbaren Luftdüse ohne Strömungsversperrung. Über entsprechende Dimensionierung und Anordnung des Verdrängungskörpers 13 können unterschiedliche Strahlaufweitungen für verschiedene Anwendungen der Luftauslassdüse 1 realisiert werden.

## Patentansprüche

1. Luftauslassdüse für eine Lüftungsanlage, insbesondere in einem Fahrzeug,
mit einem eine Auslassmündung aufweisenden Düsengehäuse mit Düsenmündungselement und einem im Mündungsbereich in der Luftströmung angeordneten Verdrängungskörper, der mit dem Düsenmündungselement verbunden ist,
dass die Position des Verdrängungskörpers (13) in axialer Richtung relativ zu der Auslassmündung (12) einstellbar ist, indem er von einer Position in der Auslassmündung (12) in eine Position außerhalb des Düsengehäuses (11) verschiebbar ist,
**dadurch gekennzeichnet,**
**dass** der Verdrängungskörper (13) eine einstellbare Strömungsversperrung aufweist.

2. Luftauslassdüse nach Anspruch 1,
**dadurch gekennzeichnet,**
**dass** der Verdrängungskörper (13) in der Position in der Auslassmündung (12) minimale Strömungsversperrung aufweist.

3. Luftauslassdüse nach Anspruch 1 oder 2,
**dadurch gekennzeichnet,**
**dass** der Verdrängungskörper (13) in einer Position außerhalb des Düsengehäuses (11) hohe Strömungsversperrung aufweist.

4. Luftauslassdüse nach einem der Ansprüche 1 bis 3,
**dadurch gekennzeichnet,**
**dass** der Verdrängungskörper (13) einen einstellbaren Querschnitt und/oder eine einstellbare variable Form aufweist.

5. Luftauslassdüse nach einem der Ansprüche 1 bis 4,
**dadurch gekennzeichnet,**
**dass** der Verdrängungskörper (13) verstellbare Lamellen (15) oder Stäbe aufweist, wobei die Lamellen (15) vorzugsweise V-förmig angeordnet sind.

6. Luftauslassdüse nach einem der Ansprüche 1 bis 5,
**dadurch gekennzeichnet,**
**dass** der Verdrängungskörper (13) eine elastische Membran (16) aufweist.

7. Luftauslassdüse nach Anspruch 5 oder 6,
**dadurch gekennzeichnet,**
**dass** die Membran (16) und/oder die Lamellen (15) und/oder Stäbe zum Einstellen von unterschiedlich geformten Begrenzungsflächen und/oder Querschnitten des Verdrängungskörpers (13) ausgebildet ist bzw. sind.

8. Luftauslassdüse nach einem der Ansprüche 1 bis 3,
**dadurch gekennzeichnet,**
**dass** der Verdrängungskörper (13) eine einstellbare Luftdurchlässigkeit aufweist.

9. Luftauslassdüse nach Anspruch 8,
**dadurch gekennzeichnet,**
**dass** der Verdrängungskörper (13) eine über seinen Querschnitt homogene Luftdurchlässigkeit aufweist.

10. Luftauslassdüse nach Anspruch 8,
**dadurch gekennzeichnet,**
**dass** der Verdrängungskörper (13) eine in lokal abgegrenzten Flächen unterschiedlich einstellbare Luftdurchlässigkeit aufweist.

11. Luftauslassdüse nach einem der Ansprüche 8 bis 10,
**dadurch gekennzeichnet,**
**dass** der Verdrängungskörper (13) mehrere, vorzugsweise drei gegeneinander verschiebbare Gitter (19a, 19b, 19c) und/oder Lochbleche aufweist.

12. Luftauslassdüse nach einem der Ansprüche 8 bis 11,
**dadurch gekennzeichnet,**
**dass** das Düsenmündungselement (14) in axialer Richtung aus dem Düsengehäuse (11) ausziehbar ausgebildet ist, indem das Düsenmündungselement (14) Seitenwände aufweist, die so ausgebildet sind, dass das Düsenmündungselement (14) weitgehend gleichen Querschnitt bei geringfügig größeren oder kleineren Dimensionen wie das Düsengehäuse (11) aufweist und dessen Seitenwände an Wänden des Düsengehäuses (11) formschlüssig anliegend geführt sind.

13. Luftauslassdüse nach einem der Ansprüche 8 bis 11,
**dadurch gekennzeichnet,**
**dass** das Düsenmündungselement (14) in axialer Richtung aus dem Düsengehäuse (11) ausziehbar ausgebildet ist, indem das Düsenmündungselement (14) über Schienen in dem Düsengehäuse (11) verschiebbar gelagert ist, wobei die Schienen zwischen Düsengehäusewand und Düsenmündungselement (14) oder an zentraler Stelle in dem Düsengehäuse (11) entlang der Mittellängsachse (21) verlaufend angeordnet sind.

14. Luftauslassdüse nach Anspruch 12,
**dadurch gekennzeichnet,**
**dass** die Seitenwände des Düsenmündungselementes (14) im Bereich des Verdrängungskörpers (13) Aussparungen aufweist, die zum radialen Austritt von Luft ausgebildet sind.

15. Luftauslassdüse nach Anspruch 14,
**dadurch gekennzeichnet,**
**dass** die Aussparungen des Düsenmündungselementes (14) bei eingeschobenem Düsenmündungselement (14) von dem Düsengehäuse (11) abgedeckt sind und bei ausgezogenem Düsenmündungselement (14) frei durchströmbar sind.

16. Luftauslassdüse nach einem der Ansprüche 8 bis 15,
**dadurch gekennzeichnet,**
**dass** der Verdrängungskörper (13) am äußeren Ende des Düsenmündungselements (14) angeordnet ist und den Querschnitt des Düsenmündungselements (14) zumindest teilweise abdeckt, vorzugsweise senkrecht zu dessen Seitenwänden angeordnet ist.

17. Luftauslassdüse nach einem der Ansprüche 1 bis 16,
**dadurch gekennzeichnet,**
**dass** das Düsengehäuse (11) eine Verstellvorrichtung (17) zum Einstellen der Strömungsversperrung, vorzugsweise der Luftdurchlässigkeit und/oder der Position und/oder der Form, des Verdrängungskörpers (13) aufweist.

18. Luftauslassdüse nach Anspruch 17,
**dadurch gekennzeichnet,**
**dass** die Verstellvorrichtung (17) ein manuelles Bedienelement (20) aufweist oder mit einem solchen verbunden ist, das zum manuellen Verstellen der Strömungsversperrung, vorzugsweise der Luftdurchlässigkeit und/oder der Position und/oder der Form des Verdrängungskörpers (13) ausgebildet ist.

19. Luftauslassdüse nach Anspruch 17 oder 18,
**dadurch gekennzeichnet,**
**dass** die Verstellvorrichtung (17) zum automatischen Verstellen der Strömungsversperrung, vorzugsweise der Luftdurchlässigkeit und/oder der Position und/oder der Form des Verdrängungskörpers (13) ausgebildet ist, vorzugsweise nach einem vorgebbaren Zeitablauf und/oder Programmablauf.

20. Luftauslassdüse nach einem der Ansprüche 17 bis 19,
**dadurch gekennzeichnet,**
**dass** die Verstellvorrichtung (17) die Strömungsversperrung, vorzugsweise die Luftdurchlässigkeit und/oder die Position und/oder die Form des Verdrängungskörpers (13) so steuert, dass bei jeder Einstellung der durch den Verdrängungskörper (13) hervorgerufene Druckverlust gleich groß ist, so dass die ausströmende Luftmenge konstant ist.

## Claims

1. An air outlet for a ventilation system, in particular in a vehicle, having an outlet housing with an outlet orifice and an outlet orifice element and having a displacer positioned in the orifice area in the flow of air which is connected to the outlet orifice element, the displacer (13) being positioned such that it is axially adjustable in relation to the outlet orifice (12) in that it can be moved from a position in the outlet orifice (12) into a position outside the outlet housing (11),
**characterised in that**
the displacer (13) has an adjustable flow obstruction capacity.

2. An air outlet in accordance with claim 1,
**characterised in that**
the displacer (13) has a minimal flow obstruction capacity in the position in the outlet orifice (12).

3. An air outlet in accordance with claim 1 or 2,
**characterised in that**
the displacer (13) has a high flow obstruction capacity in a position outside the outlet housing (11).

4. An air outlet in accordance with one of claims 1 to 3,
**characterised in that**
the displacer (13) has an adjustable cross-section and/or an adjustably variable shape.

5. An air outlet in accordance with one of claims 1 to 4,
**characterised in that**
the displacer (13) has adjustable strips (15) or bars, said strips (15) preferably being positioned in a V-shape.

6. An air outlet in accordance with one of claims 1 to 5,
**characterised in that**
the displacer (13) has an elastic membrane (16).

7. An air outlet in accordance with claim 5 or 6,
**characterised in that**
the membrane (16) and/or the strips (15) and/or bars is/are designed to adjust differently, locally delimited areas and/or cross-sections of the displacer (13).

8. An air outlet in accordance with one of claims 1 to 3,
**characterised in that**
the displacer (13) has adjustable air permeability.

9. An air outlet in accordance with claim 8,
**characterised in that**
the air permeability of the displacer (13) is homogenous across its cross-section.

10. An air outlet in accordance with claim 8,
**characterised in that**
the air permeability of the displacer (13) can be adjusted differently in locally delimited areas.

11. An air outlet in accordance with one of claims 8 to 10,
**characterised in that**
the displacer (13) has several, preferably three grilles (19a, 19b, 19c) and/or perforated plates which can be moved in relation to one another.

12. An air outlet in accordance with one of claims 8 to 11,
**characterised in that**
the outlet orifice element (14) is designed such that it can be pulled axially out of the outlet housing (11) **in that** the outlet orifice element (14) has side walls which are designed such that the outlet orifice element (14) has largely the same cross-section but slightly larger or smaller dimensions than the outlet housing (11) and its side walls lie flush against the walls of the outlet housing (11) forming a positive connection.

13. An air outlet in accordance with one of claims 8 to 11,
**characterised in that**
the outlet orifice element (14) is designed such that it can be pulled axially out of the outlet housing (11) **in that** the outlet orifice element (14) is mounted on rails in the outlet housing (11), the rails being positioned between the outlet housing wall and the outlet orifice element (14) running along the central longitudinal axis (32).

14. An air outlet in accordance with claim 12,
**characterised in that**
the side walls of the outlet orifice element (14) have recesses in the area of the displacer (13) which are designed to allow the radial emergence of air.

15. An air outlet in accordance with claim 14,
**characterised in that**
the recesses in the outlet orifice elemem (14) are covered by the outlet housing (11) when the outlet orifice element (14) in pushed in and that air is able to pass through them freely when the outlet orifice element (14) is pulled out.

16. An air outlet in accordance with one of claims 8 to 15,
**characterised in that**
the displacer (13) is positioned at the outer end of the outlet orifice element (14) and at least partially covers the cross-section of the outlet orifice element (14), preferably perpendicular to its side walls.

17. An air outlet in accordance with one of claims 1 to 16,
**characterised in that**
the outlet housing (11) has an adjusting device (17) for adjusting the flow obstruction, preferably the air permeability and/or the position and/or the shape of the displacer (13).

18. An air outlet in accordance with claim 17,
**characterised in that**
the adjusting device (17) has or is connected to a manual operating element (20) which is designed for the manual adjustment of the flow obstruction, preferably the air permeability and/or the position and/or the shape of the displacer (13).

19. An air outlet in accordance with claim 17 or 18,
**characterised in that**
the adjusting device (17) is designed for the automatic adjustment of the flow obstruction, preferably the air permeability and/or the position and/or the shape of the displacer (13), preferably in accordance with a predeterminable time or program sequence.

20. An air outlet in accordance with one of claims 17 to 19,
**characterised in that**
the adjusting device (17) controls the flow obstruction, preferably the air permeability and/or the position and/or the shape of the displacer (13) in such a manner that whatever position is selected the loss of pressure as a result of the displacer (13) is identical and the volume of air discharged is constant.

## Revendications

1. Buse de sortie d'air pour une installation de ventilation, notamment dans un véhicule, avec un boîtier de buse comprenant une embouchure de sortie et un corps de refoulement disposé dans l'écoulement d'air au niveau de l'embouchure, relié à l'élément d'embouchure de la buse, la position du corps de refoulement (13) étant réglable dans la direction axiale par rapport à l'embouchure de sortie (12) grâce au fait qu'il peut être coulissé d'une position dans l'embouchure de sortie (12) vers une position à l'extérieur du boîtier de la buse (11), **caractérisée en ce que** le corps de refoulement (13) comprend un dispositif de blocage de l'écoulement réglable.

2. Buse de sortie d'air selon la revendication 1, **caractérisée en ce que** le corps de refoulement (13) présente un blocage minimal de l'écoulement lorsqu'il est dans la position à l'intérieur de l'embouchure de sortie (12).

3. Buse de sortie d'air selon la revendication 1 ou 2, **caractérisée en ce que** le corps de refoulement (13) présente un blocage maximal de l'écoulement lorsqu'il est dans la position à l'extérieur du boîtier de la buse (11).

4. Buse de sortie d'air selon l'une des revendications 1 à 3, **caractérisée en ce que** le corps de refoulement (13) présente une section réglable et/ou une forme variable.

5. Buse de sortie d'air selon l'une des revendications 1 à 4, **caractérisée en ce que** le corps de refoulement (13) comprend des lamelles (15) ou des tiges, les lamelles (15) étant disposées de préférence en V.

6. Buse de sortie d'air selon l'une des revendications 1 à 5, **caractérisée en ce que** le corps de refoulement (13) comprend une membrane élastique (16).

7. Buse de sortie d'air selon la revendication 5 ou 6, **caractérisée en ce que** la membrane élastique (16) et/ou les lamelles (15) et/ou les tiges sont conçues pour produire des surfaces et/ou des sections du corps de refoulement (13) de formes différentes.

8. Buse de sortie d'air selon l'une des revendications 1 à 3, **caractérisée en ce que** le corps de refoulement (13) présente une perméabilité à l'air ajustable.

9. Buse de sortie d'air selon la revendication 8, **caractérisée en ce que** le corps de refoulement (13) présente une perméabilité à l'air homogène sur toute sa section.

10. Buse de sortie d'air selon la revendication 8, **caractérisée en ce que** le corps de refoulement (13) présente une perméabilité à l'air ajustable de manière différente dans des zones localisées.

11. Buse de sortie d'air selon l'une des revendications 8 à 10, **caractérisée en ce que** le corps de refoulement (13) comprend plusieurs, de préférence trois, grilles (19a, 19b, 19c) et/ou des tôles perforées, coulissantes les unes par rapport aux autres.

12. Buse de sortie d'air selon l'une des revendications 8 à 11, **caractérisée en ce que** l'élément d'embouchure de la buse (14) est conçu de manière extractible en direction axiale du boîtier de la buse (11), grâce au fait que l'élément d'embouchure de la buse (14) comprend des parois latérales conçues de façon à ce que l'élément d'embouchure de la buse (14) présente une section égale, lors de dimensions légèrement plus grandes ou plus petites, à celle du boîtier de la buse (11) et de façon à ce que ses parois latérales soient guidées avec une complémentarité de forme le long des parois du boîtier de la buse (11).

13. Buse de sortie d'air selon l'une des revendications 8 à 11, **caractérisée en ce que** l'élément d'embouchure de la buse (14) est conçu de manière extractible en direction axiale du boîtier de la buse (11), grâce au fait que l'élément d'embouchure de la buse (14) est logé sur des rails dans le boîtier de la buse (11), les rails étant disposés entre la paroi du boîtier de la buse (11) et l'élément d'embouchure de la buse (14) ou au niveau du centre dans le boîtier de la buse (11), le long de l'axe longitudinal (21).

14. Buse de sortie d'air selon la revendication 12, **caractérisée en ce que** les parois latérales de l'élément d'embouchure de la buse (14) comprennent, au niveau du corps de refoulement (13), des évidements aménagés afin de permettre la sortie radiale de l'air.

15. Buse de sortie d'air selon la revendication 14, **caractérisée en ce que** les évidements de l'élément d'embouchure de la buse (14) sont recouverts par le boîtier de la buse (11) lorsque l'élément d'embouchure de la buse (14) est inséré et l'écoulement est libre lorsque l'élément d'embouchure de la buse (14) est retiré.

16. Buse de sortie d'air selon l'une des revendications 8 à 15, **caractérisée en ce que** le corps de refoulement (13) est disposé à l'extrémité externe de l'élément d'embouchure de la buse (14) et recouvre au moins partiellement la section transversale de l'élément d'embouchure de la buse (14), de préférence perpendiculairement à ses parois latérales.

17. Buse de sortie d'air selon l'une des revendications 1 à 16, **caractérisée en ce que** le boîtier de la buse (11) comprend un dispositif de réglage (17) pour ajuster le blocage de l'écoulement, de préférence la perméabilité à l'air et/ou la position et/ou la forme du corps de refoulement (13).

18. Buse de sortie d'air selon la revendication 17, **caractérisée en ce que** le dispositif de réglage (17) comprend un élément de commande manuelle (20) ou bien est relié à un tel dispositif conçu pour le réglage manuel du blocage de l'écoulement, de préférence de la perméabilité à l'air et/ou de la position et/ou de la forme du corps de refoulement (13).

19. Buse de sortie d'air selon la revendication 17 ou 18, **caractérisée en ce que** le dispositif de réglage (17) est conçu pour le réglage automatique du blocage de l'écoulement, de préférence de la perméabilité à l'air et/ou de la position et/ou de la forme du corps de refoulement (13), de préférence selon un déroulement temporel ou programmé pouvant être prédéfini.

20. Buse de sortie d'air selon l'une des revendications 17 à 19, **caractérisée en ce que** le dispositif de réglage (17) contrôle le blocage de l'écoulement, de préférence la perméabilité à l'air et/ou la position et/ou la forme du corps de refoulement (13) de façon à ce que, lors de chaque réglage, la perte de charge provoquée par le corps de refoulement (13) ait la même valeur de telle sorte que la quantité d'air qui s'écoule soit constante.
